**Europäisches Patentamt**

**European Patent Office**

**Office européen des brevets**

(19)

(11) Publication number: **0 015 261**
**B1**

(12) # EUROPEAN PATENT SPECIFICATION

(45) Date of publication of patent specification: **10.03.82**

(51) Int. Cl.³: **C 10 J 3/12,** C 10 J 3/24, C 01 B 3/56

(21) Application number: **79900233.2**

(22) Date of filing: **01.03.79**

(86) International application number:
**PCT/SE79/00042**

(87) International publication number:
**WO 79/00687 20.09.79 Gazette 79/19**

(54) **MEANS AND PROCEDURE FOR GASIFICATION OF SOLID FUELS.**

(30) Priority: **02.03.78 SE 7802415**

(43) Date of publication of application:
**17.09.80 Bulletin 80/19**

(45) Publication of the grant of the patent:
**10.03.82 Bulletin 82/10**

(84) Designated Contracting States:
**FR**

(56) References cited:
**DE - C - 947 376**
**DE - A1 - 2 704 032**
**FR - A1 - 2 265 845**
**GB - A - 620 029**
**US - A - 674 525**
**US - A - 2 794 725**
**US - A - 3 615 298**
**US - A - 3 700 422**
**US - A - 3 985 520**

(73) Proprietor: **LINDSTRÖM, Olle**
**Lorensviksvägen 14**
**S-18363 Täby (SE)**

(72) Inventor: **LINDSTRÖM, Olle**
**Lorensviksvägen 14**
**S-18363 Täby (SE)**

(74) Representative: **Bonnetat, Christian**
**Cabinet PROPI Conseils 23 rue de Léningrad**
**F-75008 Paris (FR)**

Courier Press, Leamington Spa, England.

## Means and procedure for gasification of solid fuels

Pyrolytic methods are frequently used for the conversion of solid fuel to fuel gases. The solid fuel is thereby gasified in an atmosphere containing less oxygen than is required for complete combustion. In the classic process of pyrolysis there is no other oxygen present than the oxygen which may occur bonded in the solid fuel or which might be brought in with the solid fuel. The fuel is thereby disposed in a retort which in its turn is disposed in a furnace. The goods to be pyrolyzed is thus separated from the heat source by the walls of the retort. It is also possible to supply heat directly to the goods for instance with heated bodies like balls etc. or in the form of sensible heat in hot gases which are conducted through the goods to be pyrolyzed. The hot gases can be generated by combustion of part of the pyrolysis goods in a special combustion zone disposed in the pyrolysis reactor. It is frequently of advantage to supply gases like water vapour or a mixture of water vapour with air and/or oxygen or a mixture of water vapour and hydrogen which gases take part in the gasification reactions. It is in this way possible to control the gasification reactions by these gas additions in order to get a decide composition of the product gas. It is thereby wished to obtain a thermal balance between the exothermic combustion reactions and the gasification reactions which frequently are endothermic in order to avoid heat supply from external sources.

A very large number of pyrolytic processes have been described and used since the birth of process technology. The different embodiments are governed by the character of the solid fuel, by special local and technical conditions and of course by desired compositions and quality of the product gas. Examples of solid fuels which can be with advantage converted to gas by pyrolysis are different kinds of coal from lignite to anthracite, wood, wood chips, so called green chips, wood wastes, peat, household waste, shale, different industrial waste like plastic waste, leaching residues etc. It is possible to distinguish four different classes of desired product gases: low Btu gas, intermediate Btu gas and high Btu gas and hydrogen. High Btu gas corresponds to so called synthetic natural gas and contains frequently more than 95% of methane. Low Btu gas has a fuel value on the level of 6 MJ/m³ and contains a large amount of nitrogen from the air which is used in the gasification in this case. The intermediate Btu gas has a higher heat value up to 20 MJ/m³ which is about half of the heat value of the high Btu gas. It is of course possible to convert low Btu gas to intermediate Btu gas and high Btu gas or alternatively hydrogen or intermediate Btu gas to high Btu gas alternatively hydrogen. The different gases may also be used as raw material for production of ammonia, methanol and liquid fuels.

Gasification of solid fuels in general takes part in several different steps. Many solid fuels contain large quantities of water whereby the first step of course is a drying process. With very moist fuels like peat or household waste the drying and/or dewatering plays a big role for the efficiency and economy of the gasification process. After the drying and in certain cases also in connection with the drying volatile matter start to evaporate. This evaporation is frequently accompanied by partial pyrolytic decomposition of the fuel and so-called prepyrolysis. The character of the evaporation and the prepyrolysis depends of course on the particular kind of fuel being used. In coal gasification processes evaporation starts at around 400°C and is almost completed at 700°C whereby the fuel carbonizes almost completely. Evaporation and prepyrolysis start at considerably lower temperatures for instance for household waste where among other things hydrogen chloride is generated from polyvinyl chloride polymer present at temperatures already 300°C.

Prepyrolysis, when such a step can be identified, changes successively into the pyrolysis process which involves thermal cleavage of the main part of the solid fuel to secondary fuels of different kinds, pyrolysis gas, pyrolysis oils and carbonized material, char, mainly containing coal. Ash and slag of inert components in the fuel of inorganic origin is generated simultaneously. The amount and character of these pyrolysis products depends on the kind of primary fuel and the conditions during the pyrolysis that is pressure, temperature, time, the physical state of the fuel, the composition of the gas phase etc. When the pyrolysis is carried out according to the classical pattern in a retort with indirect heat supplier from an external heat source quite large quantities of carbonized material remain after the pyrolysis. This carbonized material can be gasified in slower chemical reactions. The interesting chemical individuals hereby are hydrogen, water, carbon monoxide, carbon dioxide and methane. These take part in many different reactions which, however, may be summarized in three independent stoichiometric equations. The following three reactions are thereby particularly interesting. The heat of the reaction is designated as usual by $\Delta H$.

$$C + H_2Og = CO + H_2; \quad \Delta H = 134 \text{ kJ/mol} \tag{1}$$

$$CO + H_2Og = CO_2 + H_2; \quad \Delta H = -33 \text{ kJ/mol} \tag{2}$$

$$C + 2H_2 = CH_4; \quad \Delta H = -102 \text{ kJ/mol} \tag{3}$$

The water gas reaction (1) is highly endothermic whereas the methanation of carbon to methane is exothermic. If the gasification is directed towards production of methane one would like to combine these reactions so as to satisfy the heat requirement for hydrogen generation according to (1) is satisfied by the heat of reaction during the methanation (3). Extra energy must, however, be supplied here for instance by combustion of coal to carbon monoxide or by other means. As will be shown below this invention refers to a different way to supply the energy requirement of the endothermic water gas reaction whereby at the same time additional hydrogen is generated for among other things the exothermic methanation reaction. — The invention is, however, not specifically directed towards production of methane in its general embodiment even if this particular embodiment is of considerable interest. — A high methane content of the product gas from the primary gasification reduces the need for additional expensive process equipment for methanation. It may also be desirable to adjust the composition of the product gas to contain a very high hydrogen content to make it suitable for hydrogen production, for instance when the gas is to be used for fuel cell power plants. In other cases one may wish to adjust the composition of the product gas so as to make it suitable directly as synthesis gas for instance for the production of methanol. In these qualified gasification processes the pyrolysis process is frequently separated from the gasification step in order to get better defined conditions during the gasification and to avoid contamination with non-desirable products from the pyrolysis. The gasification is in general carried out in these cases with oxygen instead of air to avoid nitrogen in the product gas, not considering the case when the product gas is to be used for synthesis of ammonia. The present invention refers to a new procedure for gasification of solid fuels with separate pyrolysis and gasification steps.

The new method utilizes several independent process means which together produce the surprisingly simple and efficient solution of the problem, which have been indicated above, which meets the requirements which can be formulated for an ideal gasification process. The method may be said to represent an integration of the principles for the classical steam iron process and the classical pyrolysis process. The method uses five processes, namely combustion of pyrolysis gas from heat production, pyrolysis of the solid fuel, gasification of the solid fuel, partial reduction of iron containing material by means of pyrolysis gas and partial oxidation of reduced iron containing material. These five processes are carried out in a reactor with in principle three reactor functions: the combustion stage, the pyrolysis stage and the gasification stage and gives high thermal efficiency, high quality of the product gas and slight environmental impact.

I have above described the processes which take part during pyrolysis and gasification of solid fuels. This description shall here be supplemented with a corresponding description of the steam iron process. This is a method which has been used since long for hydrogen production. Superheated stem is brought to react with iron or FeO in production of mainly $Fe_3O_4$ and hydrogen. The iron containing material which has been oxidized in this way is then again reduced with a reducing gas like carbon monoxide or a low Btu gas for instance according to

$$Fe_3O_4 + CO = 3FeO + CO_2, \Delta H = 15 \text{ kJ/mol FeO} \tag{4}$$

The oxidation reactions are exothermic while the reduction is endothermic for instance according to

$$3FeO + H_2O = Fe_3O_4 + H_2, \Delta H = -24 \text{ kJ/mol FeO} \tag{5}$$

The steam iron process has fairly low thermal efficiency since the gas which leaves the reducing reactor contains considerable quantities of carbon monoxide and/or hydrogen also under equilibrium conditions and this gas cannot be used for reduction and is therefore in general not utilized in the process.

The steam iron process has recently become of interest as a hydrogen producer for hydrogasification of coal. A process system for the steam iron process contains in principle three system parts: (1) gas generator for the production of the reducing gas to reduce the iron oxide in a (2) reducing reactor at the same time as reduced iron containing material is oxidized in (3) oxidation reactor to iron oxides in the simultaneous generation of hydrogen for the hydrogen consuming system. The iron containing material may be pieces of iron ore or sintered pellets of iron oxides which can be transported between the two reactors in oxidized respectively reduced condition. It is also possible to dispose the iron containing material in stationary beds which take part in the reduction respectively the oxidation process. Different gas generators of the state of art can be used for the production of the reducing gas which generators can work with different kinds of solid fuels for instance coal, coke, wood, peat, wood waste etc. The present invention is thus concerned as indicated above with a new procedure to convert solid fuels to valuable fuel gas frequently intermediate Btu gas which is well suited as synthesis gas for the production of high Btu gas, methanol or hydrogen. In a special embodiment the new process gives a high methane content in the product gas.

A very valuable property of the new process is that it can be thermally independent of its environment and that it does not require supply of oxygen or hydrogen from external sources. Other valuable properties is high thermal efficiency and small environmental impact. The different steps of the process can be carried out in a comparatively short time and therefore the capacity of a given reactor size is large. The process can be used for all kinds of solid fuels from household waste to anthracite. The process can also be used with difficult fuels with tendency to cake during gasification which is the case with household waste and so-called caking coal. The process is also suitable for mixtures of different fuels for instance mixtures of household waste, sewage sludge, wood waste and shale. All these advantages can be carried back to the central spirit of the invention which will be described in detail in the following description. In order to simplify the description I shall in the following use a comparatively simple embodiment. Wood chips is a suitable object for this description of the spirit of the invention since this solid fuel can be said to be a representative compromise of the different kinds of solid fuels which can be converted with the process according to the invention.

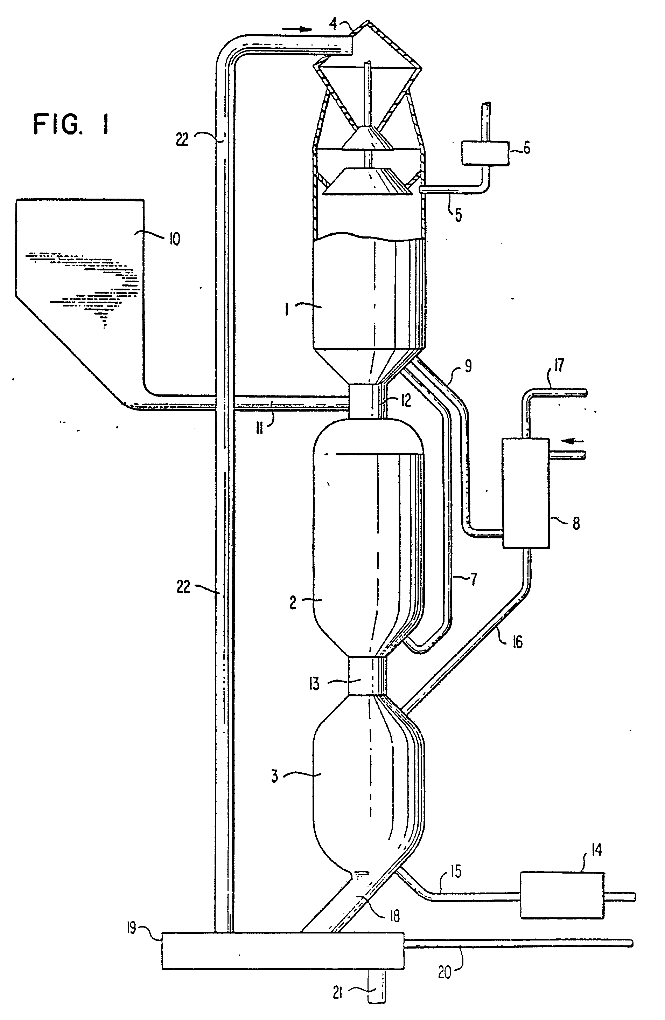

Figures 1 to 5 show in principle different embodiments of the invention.

Figure 1 shows five process steps which are carried out in three reactors, reactor parts or stages. The three stages are called the preheat stage (1), the reduction stage (2) and the oxidation stage (3). In the preheat stage residual gas is being combusted that was developed in the pyrolysis stage whereby the iron containing material is partially reduced so as to be oxidized in the gasification stage in reaction with water vapour which in addition together with hydrogen is gasifying the char remaining from the pyrolysis stage. The iron containing material is circulated through the three stages whereby the material is heated up in the preheat stage, reduced in the reduction stage and oxidized in the oxidation stage. The solid fuel is fed to the pyrolysis stage where it pyrolyzes to a larger or smaller quantity of char, which is then carried over to the oxidation stage, and pyrolysis gas which is carried to the preheat stage for combustion. Ash and slag, leaving the remains of the solid fuel after the gasification, are leaving the oxidation stage together with the iron containing material and is then separated away while the iron containing material is carried back to the combustion stage.

The preheat stage (1) is furnished with feeding means (4) for the iron containing material and a pipe (5) for leaving flue gases with the flue gas fan (6). Pyrolysis gas is supplied by means of the pipe (7). Combustion air is preheated in the heat exchanger (8) and carried to the combustion stage with the pipe (9). Wood chips is conveyed from the chip bin (10) through the conduit to the feeding means (12) where the chip is mixed with the hot iron containing material from the combustion stage and is brought into the reduction stage (2). Gas which remains after pyrolysis and reduction of the iron containing material is brought to the preheat stage with the pipe (7) whereas the hot iron containing material and the char remaining from the pyrolysis is brought to the oxidation stage (3) by the means (13). Water vapour is brought to the oxidation stage from the boiler (14) via the pipe (15). The product gas which contains varying amounts of hydrogen, carbon monoxide, methane and other gases leaves the oxidation stage via the pipe (16) to the heat exchanger (8) where the product gas gives off its sensible heat to the combustion air. The cooled product gas leaves via the pipe (17) for further processing. The solid material leaves the oxidation stage (3) via the discharging means (18) to the separating means (19) which may contain a water lock to which water is brought via the pipe (20), and separating means which separates the solid material into slag and ash, which leaves via the discharge means (21), and iron containing material which is recirculated to the preheat stage by means of the transporting means (22). Figure 1 serves only the purpose to illustrate the spirit of the invention. Particular details in the scheme can be varied within the scope of the invention. It is thus possible to let the pyrolysis gas flow counter-currently through the reduction stage or to let the product gas flow cocurrently through the oxidation stage. It is also possible to preheat the combustion air in heat exchange with leaving flue gas. The solid fuel can also be preheated and dried in direct heat exchange with outgoing flue gases. Such process-technical modifications can easily be designed by the expert within the scope of the invention.

The above description clarifies that the characteristic feature of the invention is that the solid fuel is gasified to a fuel gas with a high energy content with varying amounts of hydrogen, carbon monoxide and methane by means of an iron containing material which is brought to react in three steps whereby in the first step, the preheat step, the iron containing material is heated to a high temperature by means of hot combustion gases which are generated preferably by combustion of a fuel gas which has been generated in the second step, the reduction step, by means of pyrolytic decomposition of said solid fuel in contact with said heated iron containing material from the first step, said iron containing material thereby being partially reduced in contact with the pyrolysis gas in the second step whereafter the partially reduced iron containing material together with the eventually remaining residue of the solid fuel is brought to react with water vapour in the third step, the oxidation step, for the production of the fuel gas with simultaneous oxidation of the iron containing material whereafter the fuel gas is discharged from the system while the iron containing material is recirculated to the first step.

The most important advantage of the new process is that it permits conversion of solid fuels to a fuel gas almost free from nitrogen without using external energy sources or oxygen in the process.

A closer inspection of the scheme in Figure 1 and analysis of the invention shows a number of other advantages compared to the state of art. A characteristic feature is that the energy value also of solid fuels of poor quality, for instance household waste, can be recovered completely and converted to a highly valuable form. The gas which is formed in the reduction step represents particularly with household waste a poor energy form because of impurities. The energy value is, however, recovered partly during the reduction of the iron containing material and partly during the combustion whereby the energy is converted to sensible heat of the iron containing material, which is a "clean" energy form. The sensible heat of the iron containing material is utilized rapidly and efficiently in the pyrolysis whereas the energy content of eventually remaining char is recovered during the gasification.

The major part of the volatile impurities will thus be found in the flue gas after the combustion. This flue gas is filtered and cooled in the bed of the iron containing material. The combustion may take place at moderate air excess thanks to among other things catalytic action of the iron containing material in the combustion zone. Difficult-to-destruct compounds, which might be present in a pyrolysis gas, and which are not destroyed in one pass through the combustion zone may thus precipitate to a large extent in the bed and once more be brought up to a high temperature. The flue gas can therefore frequently be sent out in the atmosphere with no further purification, and when such purification is deemed necessary, for instance at a high content of hydrogen chloride, the conditions are suitable for comparatively cheap purification procedures compared to what would be the case with other methods for utilization of the solid fuel in question, for instance household waste.

In the case of solid fuels with a high sulphur content it may be of advantage to put in purification means before the combustion. One may thus use a bed of calcined limestone or dolomite which is brought to the temperature of the pyrolysis gas for the elimination of hydrogen sulphide and carbonyl sulphide. The iron containing material will also react with acid components in the combustion gases and it can also catalyze the oxidation of sulphur dioxide to sulphur trioxide. It may sometimes be of advantage to recover these products in a flue gas scrubber or in purification means for the pyrolysis gas before its entrance into the first stage. There is no difficulty for the expert to find optimal conditions for any solid fuel and thereby utilize state of art in this area.

The new process also permits a very complete burn out of the solid fuel which is of great importance when the solid fuel is for instance household waste or other similar difficult fuels. This is due to the efficient heat transfer conditions but also due to the special process sequence. The hot iron containing material exhibits a very large surface for heat transfer, several orders of magnitude larger than what might be possible in a classical pyrolysis retort. Therefore the solid fuel is brought up very rapidly to a high and even temperature which is guarantee for complete pyrolysis.

Conditions for heat transfer are also quite good in the oxidation step where heat for gasification is developed on the surface of the iron containing material during its oxidation. Conditions for heat transfer are also very good in the preheat step particularly in its combustion zone where the combustion is carried out to a large extent catalytically and where also some additional heat is generated through the direct oxidation of the surface of the iron containing material. The solid fuel is therefore exposed for an intense thermal treatment, first during reducing conditions whereby gas and solid material accompany each other cocurrently. In the third stage the residue of the solid fuel is exposed for a continued thermal treatment in a different and so to say supplementary environment from the destruction point of view. There is also a possibility to recirculate non-reacted material together with the iron containing material to the combustion zone where an efficient final destruction is obtained.

The solid material which is discharged from the reactor may preferably first be separated with a screen in two fractions, a coarse fraction which contains iron containing material of original size is recirculated directly to the reactor whereas the finer fraction is separated in a magnetic fraction and a non-magnetic fraction. The magnetic fraction, which thus contains fragments of iron containing material and iron metals originating from the solid fuel, may be delivered to a steel mill, whereas the non-magnetic fraction can be utilized in other ways depending on the character of the solid fuel.

The iron containing material exhibits a heat transfer function and a hydrogen generating function as mentioned above but it also exhibits an important mechanical function. During the movement through the reactor larger pieces of the solid fuel will be broken down to smaller sizes. A grinding action is thus obtained which generates new surfaces on the solid fuel, which accelerates the pyrolysis and gasification reactions. The movement will also give good mixing and homogenisation which contributes to stable reaction conditions. The bed may also exert a substantial pressure on objects with low bulk density for instance cans and bottles of steel, plastic and aluminium so these are broken down and pressed to a small volume compared to the original volume. A very important factor is that the iron containing material prevents formation of vaults and pillar structures which often disturb the operation, for instance in the pyrolysis of household waste or gasification of strongly caking coal, oil shale etc. The active zones of the reactor will also be filled quite well with the solid material which prevents chanelling for gases.

The heat transfer and mechanical factors which have been discussed above produce short residence times for the fuel in the reactor which gives a high production capacity for given reactor volume and a low specific investment. Equally as important for good operational economy is the reliability of the system which will be high because of the mechanical circumstances discussed above, particularly the reduced risk for vault and pillar formations.

Another feature of the new process is that charge and discharge of solid material and gases is taking place under favourable conditions. The discharge of the iron containing material together with ash and slag from the oxidation step is thus taking place at a low temperature, preferably via a water lock if the third step is carried out near atmospheric pressure. Furthermore the charge of iron containing material to the first step, the preheat step, takes place at a low temperature. It is therefore possible to make a choice between a large number of commercially available and wellproven means for carrying out these operations which have been developed within state of art of blast furnace and gas generator technology.

The charge of the solid fuel to the system is a more difficult operation. A favourable effect here is that air which may come into the system in this operation does not cause greater damage but may sometimes be of advantage. The air can thus be used for the combustion in the preheat step and also contribute to a partial oxidation in the reduction step so as to cover part of the heat requirement of the pyrolysis process.

An important question here is the pressure balance between the combustion and pyrolysis steps which in its turn depends on whether the gas flow through the reduction step is carried out co-currently or counter-currently relative to the solid material. If the flow is counter-current the solid fuel can be charged continuously with a screw feeder, teeth charger, a hydraulic operated charging piston or pusher or by other means. Co-current flow in the reduction step is a more advanced embodiment from a process point of view which gives advantages particularly in connection with more difficult fuels since the residence time of the pyrolysis gas will be longer. This embodiment, however, produces tougher requirements on the charging means and the system for pressure balance. As an alternative to continuous charge one may here visualize a discontinuous process whereby the iron containing material and the solid fuel are alternately fed in a discontinuous way into the reduction step which gives the bed a stratified structure. Stratified structures are also developed when the solid fuel is fed continuously but the iron containing material discontinuously and vice versa. With some combinations for instance continuous charge of both solid fuel and iron containing material to the reduction step and co-current flow through the reduction one has to use a fan in pipe (7) which must be fabricated in heat resistant material if the pyrolysis gas is not cooled before the fan. It is, however, possible under these operational conditions to work near atmosphere pressure at the point of charge for the solid fuel. Charge and discharge of gas can be carried out by those means which are used in blast-furnace technology and gas generator technology. Also here conditions are not particularly critical. The risk for in-leakage of air between the first and the second stage has been discussed above. With co-current flow in the reduction step possible gas leakage from the reduction step to the preheat step does not produce any disturbance of importance. The gas will be burnt and the heat utilized. The same is the case for the conditions between the second and the third stage. Leakage of pyrolysis gas to the oxidation step will influence the quality of the product gas to some extent depending on the character of the solid fuel. Also the pyrolysis gas has a low nitrogen content and therefore the negative effect of such mixing can in general be tolerated. The reverse case, that is leakage of product gas to the reduction zone, means only that this gas leakage will finally be burnt in the preheat zone and there being utilized as sensible heat of the iron containing material.

An important advantage from a process technical point of view which has been discussed above is the very good condition for heat transfer between the iron containing material and the goods to be pyrolyzed in the second stage compared to conventional pyrolysis with heat supply through a retort wall. The total surface for heat transfer, which is the combined surface of the particles of the iron containing material, is frequently several orders of magnitude larger compared to the amount of goods to be pyrolyzed than what is possible in practical pyrolysis retorts. The residence time can therefore be made short in this zone and is mainly governed by the velocity of the reduction of the iron oxides.

It is recommended to adjust the particle size of the iron containing material and of the goods to be pyrolyzed so that the heat transfer to the goods to be pyrolyzed, respectively the reduction process, take place at about the same rate.

It is thereby possible to come down to reaction times in the second stage of the order of minutes and even below that.

The processes in the first and the third stage are also rapid, this refers to the combustion reaction as well as to the heat-uptake in the first stage and the iron oxidation in the third stage. Also in these cases the process is influenced by the particle sizes with a finer iron containing material giving shorter reaction times but at the same time also a larger pressure drop and a certain risk for formation of vaults and plugs. It has been found that particle sizes between 0.5—5.0 cm for the iron containing material give a good compromise between the different aspects which have been discussed above and permit a short residence time. It is, however, possible and in some cases of advantage, for instance with very heterogeneous solid fuels, like household waste etc., to use larger pieces of the iron containing material, up to several tenths of a centimeter counted in the longest direction from tip to tip. It is also possible to use a very fine material, iron ore concentrate with the particle size of 0.1—0.5 mm whereby the different stages are carried out in fluidized beds or so-called flash reactors, in which the particles of the iron containing material and the fuel are falling freely with residence times of the order of one second or slightly more.

The iron scrap contained in household waste may also be used as the iron containing material particularly when household waste is used in the process solely or in combination with other fuels like peat, coal, etc. In this case, the iron containing material is supplied continuously together with the fuel in which it is present and therefore a corresponding amount of iron containing material must be removed from the system to prevent build-up of iron in the system. It is advantageous to compact the iron scrap to slugs prior to the recirculation to the combustion stage since such recovered iron scrap should, in any event, be compacted before transport to the steel mill.

Sintered pellets of iron ore constitute iron containing materials which are particularly useful for more specific applications such as the gasification of coal and lignite. If there is a long distance between the gasification plant and the pellet plant, hard sintered pellets should be used since they have a longer life.

The competitive power of the process of the present invention is dependent on the cost of the iron containing material and the number of passages it can make through the reactor system.

When solid waste like household waste is used as a raw material for the procedure according to the present invention, it is also desirable to have efficient destruction of the waste so the slag and ashes may be deposited on a land fill. The instant process provides a very efficient destruction of household waste. Since gas and solid materials are flowing co-currently through the second step, there is an efficient destruction of the non-desirable components in the pyrolysis gas. This pyrolysis gas is then burned in the first step in the presence of large quantities of catalytically reactive material which provides an additional destructive effect. The remaining incompletely destroyed residues from the solid waste enter the third step where another kind of chemical treatment takes place, reaction with water vapor, with hydrogen and carbon monoxide present also in the presence of large quantities of catalytically active materials. If, in spite of these conditions, the solid waste is not completely destroyed, it may be recirculated to the first zone for another passage through the three zones. Compared with the preceding cycle there will be here an additional oxidation at high temperature in the first zone.

Gas compounds of particular interest here are sulphur containing compounds, nitrogen oxides and chlorine containing compounds particularly hydrogen chloride. Nitrogen oxides are produced in the combustion in the first zone and leave with the flue gas. The temperature is, however, comparatively low and therefore the amount of nitrogen oxides is smaller than for instance in flue gases from normal oil fired furnaces. Although not completely understood, it is believed that the iron containing material reduces the nitrogen oxide content of the flue gas to a low and acceptable level.

Since the solid fuel is introduced in the second step, chlorine-containing compounds leaving with the residual gas from the reduction comprise mainly hydrogen chloride and possibly methyl chloride and the sulphur-containing compounds will comprise hydrogen sulphide and carbonyl sulphide. Two possible procedures may be employed: (1) allow the residual gas to go directly to the first zone for combustion, or (2) remove the impurities completely or partially before combustion. The choice of procedure depends on the amount and character of the impurities of the solid fuel and the prevailing laws concerning the discharge of flue gases and process water. If household waste is used as raw material, the sulphur content is generally quite low whereas the inorganic salts and chlorine containing polymers which are present can provide relatively large quantities of hydrogen chloride. Pyrolysis of household waste also frequently produces ammonia in a larger quantity than the corresponding amount of hydrogen chloride present. Therefore, cooling of the residual gas from the reduction in a scrubber can scrub out hydrogen chloride as an ammonium chloride solution. If the hot residual gas from the second step is sent to the first step for combustion directly, hydrogen chloride, produced when household waste is used as the fuel, can be scrubbed out of the cooled flue gas by passing it through a scrubber.

Other solid fuels, such as coal, may contain comparatively large amounts of sulphur. With such fuels, it is advantageous to remove sulphur containing compounds from the residual gas from the pyrolysis zone. This may be done by procedures known to those skilled in this art with various wet and dry processes, some of which operate at high temperature. A particularly useful method comprises absorption in a bed of calcined dolomite. Other processes employ absorption in carbonate solutions, which, however, require that the residual gas be cooled in a waste heat boiler in much the same way as done with gas generators of the so-called Lurgi-type. The sulphur may then be recovered in elemental form in a so-called Claus-unit.

Solid fuels also contain metal containing compounds including heavy metals and alkali metals. Part of these metals stick to the iron containing material whereas others, such as cadmium, which have a high vapor pressure, are present as vapor in the system. The embodiment described in Figure 1 indicates that such volatile heavy metals are accumulated in the first two steps since the gas which leaves these two zones is frequently at a comparatively low temperature. If for some reason the hot residual gas is not cooled, it may be necessary to either periodically or continuously remove a smaller flow of the gas in order to remove the heavy metals which are present as vapor.

Considering the possibility of a build-up of heavy metals in the iron containing material it is necessary to remove part of the iron containing material from the system, periodically or discontinually, and replace the removed material with new material. One advantage with the procedure according to the invention, particularly with impure fuels, is of course that materials passing over to the oxidation step will be very efficiently purified and therefore the raw gas which is discharged from this step is quite pure. One may therefore in general let the product gas go directly to further processing with no special purification with respect to metals, hydrochloric acid, sulphur compounds, etc. If the solid fuels should be very troublesome there is however a possibility to reverse the gas flow through the oxidation step so as to have the raw gas passing through co-currently instead of counter-currently. In this case the raw gas may leave the system at a low temperature eventually via a water lock or similar means which at the same time involves a scrubber function.

The various gasification reactions have been mentioned briefly above. The composition of the product gas is governed by the extent of pyrolysis in the reduction step.

If the process is carried out such that a large amount of char is charged to the third reaction zone, the thermal efficiency is high and the carbon monoxide content of the product gas will increase. It is possible to reach efficiencies as high as 80%. A unit for the gasification of one million tons of chips per year will gasify 120 tons of chips per hour. The reactor has a diameter of 6 meters and the height of the reactor steps are 5, 12 and 3 meters counted from the oxidation step. The feed of iron ore is 840 tons per hour as sintered pellets with 2.5 cms. diameter. The residual gas flow to the preheat step is 168,000 cubic meters* per hour (9% $CO$, 20% $CO_2$, 19% $N_2$, 24% $H_2$, 28% $H_2O$) where it is burned with 132,000 cubic meters per hour of air. The product gas flow from the oxidation step is 190,000 cubic meters* per hour (28% $CO$, 60% $H_2$, 1% $CH_4$, 11% $CO_2$ based on dry gas). The relationship between the required amounts of fuel and iron containing material depends on the type of fuel utilized.

It is possible to produce a synthesis gas with a desired $H_2/CO$ ratio by adjustment of the process conditions, in particular conditions in the reductions step, eventually by a limited supply of oxygen/steam to this step and adjustment of the amount of iron containing material, and the temperature of the incoming iron containing material.

The conditions in the oxidation step may also be adjusted and here there is a possibility to modify the process conditions by adding a small quantity of oxygen or air in special cases. However the quantity of added oxygen is small in relation to the quantity of product gas formed, that is less than 5 mol% counted on the quantity of outgoing product gas.

The thermal conditions in the different zones depend upon desired product gas composition and the reactivity of the solid fuel.

The high temperature in the preheat step is frequently in the range 400—1200°C, where the lower level refers to fuels like peat. A suitable range for the highest temperature in the reduction step for most fuels is 500—1000°C. The oxidation step is carried out normally at a highest temperature in the range 600—1000°C, depending on the reactivity of the char. If the gasification is carried out under pressure the temperature may with advantage be around 600—800°C or slightly below to govern the methanation reaction.

The reactions of the iron containing material have been mentioned herein above. The iron containing material is present mainly as magnetite, i.e. $Fe_3O_4$, after discharge from the third step. In the first step there is a partial oxidation to hematite whereas the reduction in the second step goes preferably to Wustite, FeO, although part of the material may be reduced to metallic iron. The reduction to metallic irons leads to a higher entalphy of the outgoing gas. This is not generally desired. In the third step, the Wustite is oxidized to magnetite simultaneously with the gasification of the char.

_____

* reduced to normal conditions, 0°C and 760 mm Hg

A preferred embodiment is to use the third step as a pressurized reactor, for instance operating from about 2 to about 10 MPa (Megapascal). This promotes formation of methane in this reactor. When the oxidation step is pressurized, the temperature may be lowered to about 700°C which generally is considered too low when the system is being operated at atmospheric pressure because of carbon precipitation. High pressure and low temperatures in the range of from about 500 to about 800°C are particularly useful for methane formation. At the same time, the product gas is delivered at a high pressure, which is advantageous if the gas is to be transported in a pipe-line net or to be used for additional methanization or similar processes. The problem of charging and discharging solid materials to pressurized reactors is minimized in this case since the charge can take place in a cold state, whereas discharge takes place at the same site where the product gas is being discharged. Gas leakage at the discharging means may be recovered and utilized as fuel gas in the combustion. The presence of iron containing material in the third zone accelerates the methanization reaction, particularly when this reactor zone is pressurized. This embodiment is particularly valuable for the production of a high Btu gas from various kinds of coal.

The practical design of apparatus for the processes described herein depends on the kind of fuel being used, any special requirements regarding the quality of the product gas, and the prevailing environmental regulations. Those skilled in the art may determine precise operating conditions and design process systems therefore using components and materials of the art. The process of the present invention is particularly advantageous since the temperatures are comparatively moderate and normally there will be no slag melting.

The process system may use the three basic reactor types: the batch-, tank- and the tubular reactor. The shaft furnace is an example of a tubular reactor with the three steps separated by conical connecting zones as shown on Figure 1. One may also use batch reactors with one charge of iron material. Combinations are also feasible like one reactor for the two first steps and a second reactor for the remaining step. Gravitating reactors constitute a natural embodiment but it may also be possible to use rotating kilns. It is thus possible to carry out the reduction step in a rotating kiln in the case of co-current flow.

It is also possible to use a system of fluidized beds joined in series. The man skilled in the art can easily modify the procedure according to the invention for the case of fludized beds using known techniques for gasification and combustion in fludiized beds. See for instance the US patents 2,592,377, 2,608,526, 2,579,398, 3,615,298 and 3,700,422.

The possibility to carry out the process at very short reaction times in so-called flash reactors has also been discussed above. Flash processes are described for instance in the US patent 3,698,882 as well as patent specifications cited in this patent. In this case both fuel and iron containing material have to be present in finely divided form. Light and fluffy fuels like milled peat do not require grinding, however. The iron material, preferably particles of iron ore concentrate, will in this case be caught and carried by the fuel in the first contact after the fuel has been charged to the reduction step. The different steps are preferably separated by conical sections as shown in Figure 1. The particles are falling freely in the reactor spaces from the charging, respectively the discharging, means for each step to be collected in the lower part of respective step.

A suitable embodiment for the procedure according to the invention is however so-called gravitating beds where the material is present in the form of larger particles moving downwards in the different stages and between the stages thanks to gravity in a so-called piston flow whereby the movement of the gas in relation to the solid material is similar to the conditions in the so-called tubular reactor. This embodiment is also very important and advantageous from an environmental point of view, as has been discussed above and as shall be discussed in more detail in the following. It may here first be pointed out that gases leaving the system, i.e. the flue gas from the preheat step and the raw gas from the oxidation step are passing through beds containing quite heavy particles. Fine dust is then separated during the passage through the bed and becomes agglomerated. Gases leaving the system therefore exhibit a low dust content. The simple shaft reactor of blast furnace type is frequently preferred because of the large amount of experience available regarding the technical design of this kind of reactor and the means for charge and discharge of the solid materials and gases. This reactor type also exhibits specially important advantage from an environmental and a process technical point of view. Furthermore the new process is related to the blast furnace process, since both processes are operating with iron containing material which is reduced in one of the steps.

The reactors may be of different shape e.g. of a cylindrical shape except for the sections, where charge and discharge is taking place or be shaped like blast furnaces with the reactor section adjusted to the changes in the bulk density of the material. Thanks to the small tendency to vault and column formation there exists considerable freedom in the reactor design.

The reactor may be manufactured as a steel blanket which can be cooled by a water blanket or by water spray or by air. The use of a water blanket is of advantage since one may then produce at least part of the steam requirement for the process in this blanket. It is also possible to use linings which have been developed for blast furnaces and combustion furnaces.

Other means which are required can be selected by the man skilled in the art who has many proven apparatuses and components available for this process. It should also be pointed out that the technology which is used for the procedure according to the invention is also used in so-called pebble bed heat exchanges or in other processes for gasification of oil, shale and coal with heat transfer taking place with solid bodies or balls. The technology and components being used in these known processes may thus be directly transferred to the present invention (see e.g. the Swedish patents 207,968, 149,084; the German publication 1,115,391; and the US patent 265,750).

Thanks to the short residence times the dimensions of the reactor system are fairly small also for high capacities which also causes a low pressure drop. The pressure drops in the reduction step and the preheat steps will therefore easily be taken care of e.g. by conventional flue gas fans.

The conditions in the oxidation step of course depend on whether this step is pressurized or not. If the step is pressurized water may be pumped into it in liquid form but could also be delivered as steam from a high pressure steam system. One has of course to reduce the need for gas compressors. It may however be necessary to use smaller compressors for recycle of gas leakages at the transfer means and the discharge means.

Other pieces of auxiliary equipment for e.g. heat transfer for preheat of combustion air, scrubbers etc. constitute known technology. Means for solid materials handling are also well known. Only a few examples of suitable components shall be mentioned here. The transfer means for the iron containing material between the third and the first step could be a scoop elevator or other similar transport means. The feeder at the preheat stage could be of the lock type according to the practice with blast furnaces or other means used for commercially available gas generators operating at atmospheric pressure. The charge of the solid fuel, which could be household waste or shale residues after uranium leaching, to the second step could be done by means of water-cooled hydraulically operated plungers, so-called pushers. Other possibilities are conveyer feeders or feeding by means of rotating rolls or wheels with teeth which could also produce a certain mechanical breakdown e.g. of household waste.

The discharge from the third step of course depends on whether this step is pressurized or not. If the whole system is operating at atmospheric pressure one may use well known methods for discharge of solid materials from conventional gas generators e.g. rotating grids or fixed grids as practiced in Lurgi generators or generators of the type manufactured by Motala Verkstad.

The type of transfer means employed between the first and second steps and the second and third steps depends upon whether the third step is pressurized. If the third step is not pressurized, the three steps may theoretically be located within the same reactor body of shaft furnace type with grates or smaller sections of the furnace room between the various zones so the different processes may be separated. The gas distribution is controlled by means of the fans and/or other similar means for gas transport to and from the system.

If the third zone is pressurized, means (11) in Figure 1 must include means for discharging solid material from the second zone and a lock for charging the same material to the third zone. In this case one may use feeding means of the type used in pressurized gas generators or hydraulically operated so-called pushers. So-called sector feeder, e.g. the so-called Kamyrkiken[R] may also be used. For the separation of the iron containing material as mentioned hereinabove, screens or other known means for separation based on particle size are suggested. The iron containing material is, however, frequently present as magnetite and may therefore be separated by means of known magnetic separators.

The solid fuel may be pretreated in various ways, such as by disintegration in the case of household waste, or by chopping into chips in the case of wood waste. Those skilled in this art may design a complete system for carrying out the process of the present invention for every possible feed type based on the instant disclosure.

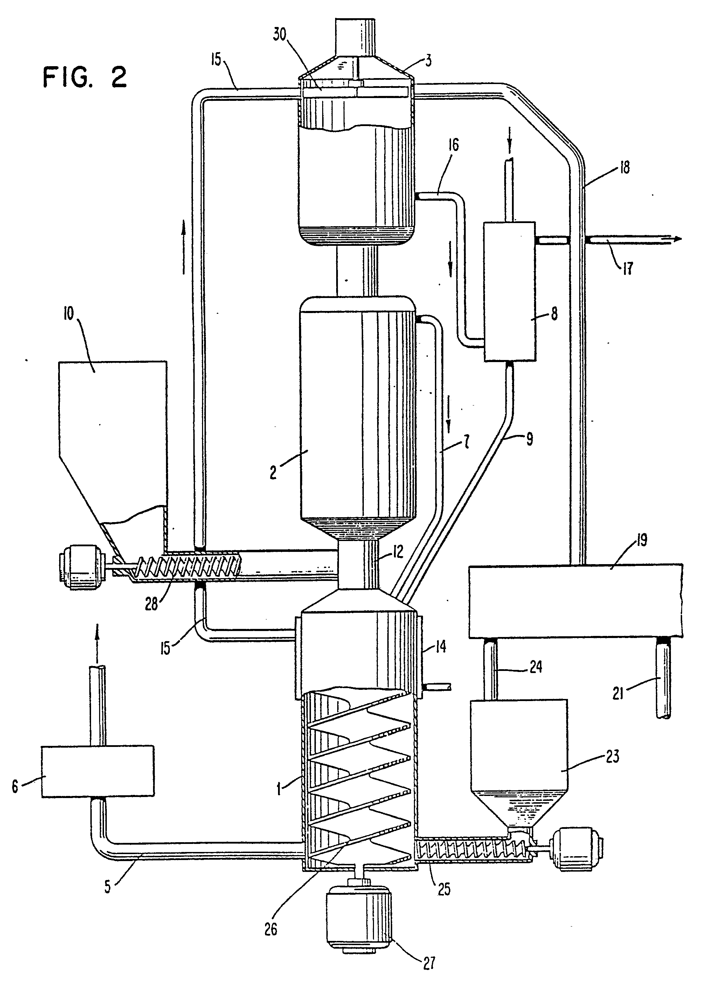

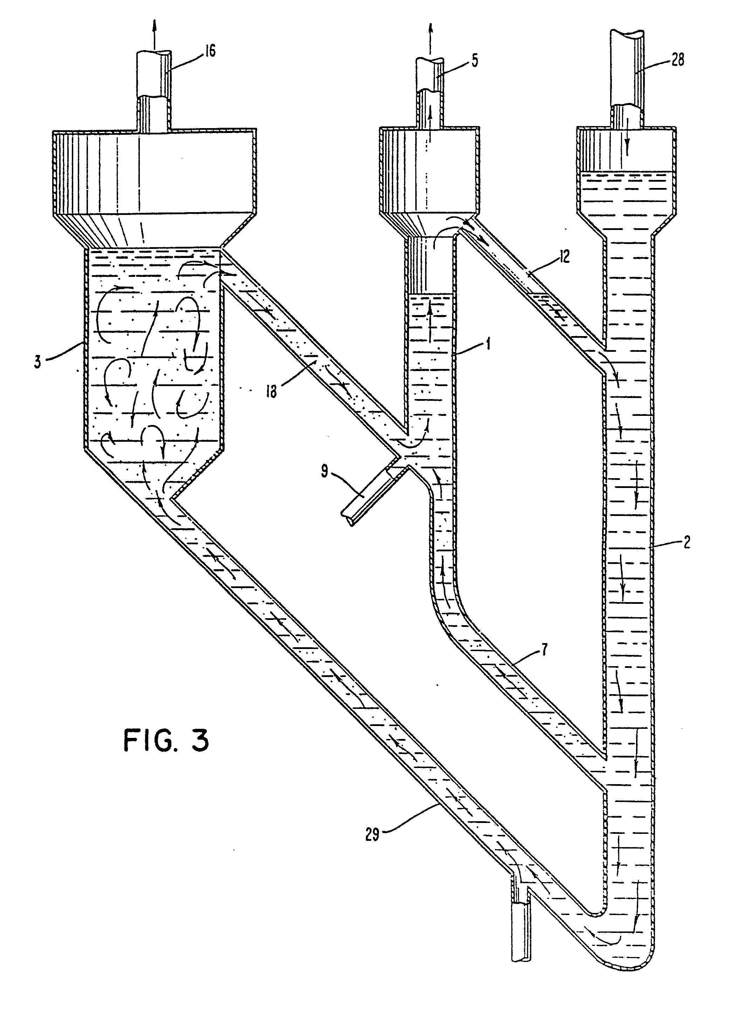

Figure 2 and Figure 3 give examples of different reactor designs which differ considerably from the shaft furnace reactor shown in Figure 1. The reactor in Figure 2 is designed for untreated household waste, which so to say is an extreme kind of fuel at one end of the quality scale of fuels, whereas the reactor according to Figure 3 is designed for very reactive finely divided fuels like wood and peat powder. These two process systems have been designed for the process according to the invention in an optimal manner considering the characteristic properties of the different fuels. These properties are taken care of in the specific embodiments.

Experience has taught us that it is extremely difficult to gasify household waste in a shaft furnace reactor. These problems are reduced very much with the procedure according to the invention thanks to the dilution of the household waste with the iron containing material with grinding and homogenization taking place thanks to the iron containing material, as was pointed out above in connection with the description of Figure 1.

Figure 2 illustrates a radical solution to this problem, that is reversal of the materials flow through the reactor. Thanks to this reversal of flow one may use a very unqualified iron containing material, namely the iron scrap contained in the household waste with no problems with vaults and channeling. The numbers in Figure 2 stand for the same structures as those in Figure 1.

Thus, (1) denotes the preheat step, (2) the reduction step and (3) the oxidation step. The iron containing material, here iron scrap, leaves the gasification zone through outlet (18). The leaving material is brought to the solids separator (19) where iron scrap of suitable size, e.g., in the range of from about 0.5 to about 2.5 cm is separated by means of magnetic separating means for recirculation back to the combustion zone (1). The solids separating means (19) are furnished with screens for this purpose. Oversize and undersize iron pieces are collected for metal recovery. It is possible to use hammer mills for oversize iron objects and also stamping machines to compact pieces of iron to balls. Larger pieces, which have not been entirely decomposed, such as large pieces of wood, etc., may be recirculated with the iron material to the combustion zone for a second trip through the system. The iron scrap flows down outlet (24) to container (23) to be recirculated and is moved into preheat step (1) by means of screw feeder (25). Screw (26) driven by motor (27), pushes the iron containing material through the three reaction steps (1), (2) and (3). The screw is made of heat resistant alloys and water cooled by means of cooling channels.

Preheated combustion air is carried to the preheat step by means of conduit (9). Pyrolysis gas for the combustion is carried to the preheat step (1) by conduit (7) when the pyrolysis gas is carried co-currently through the pyrolysis stage. It is also possible for the pyrolysis gas to flow counter-currently, in which case pyrolysis gas leaves the pyrolysis zone (2) at (12) thus passing directly from the pyrolysis zone to the combustion zone with no extra piping outside the reactor.

Combustion takes place in the upper part of the combustion zone which is furnished with water jacket (14). The water jacket serves to protect the walls of the reactor at the combustion zone. Produced steam is carried by conduit (15) to the gasification zone where it reacts with the partially reduced iron material and the char. Flue gas leaving through pipe (5) is blown to the stack by means of fan (6).

Household waste is carried by a conveyor to container (10) and moved into the lower section of the pyrolysis zone by means of screw feeders (28). Several feeders may be used to get a better distribution and mixing of the household waste with the hot iron containing material. Baffles may also be used to improve mixing. The product gas is carried by conduit (16) to heat exchanger (8) where combustion air is preheated. The gas then leaves the system for further processing.

Disengagement of the solid material may be facilitated by rotor (30) which moves the solid material towards the walls of the reactor and out of the reactor through outlet (18).

The apparatus of Figure 2 is particularly advantageous for processing household waste and other bulky materials such as low grade oil shale. The forced movement as contrasted with movement caused by gravity prevents formation of channels and locks. The flow rate may be regulated so as to maximise production.

Since oversize starting materials may be returned, it is possible to adjust production to the average properties of the fuel and not to its extreme characteristics. Mechanical conditions are also more favorable using the reversed flow described in Figure 2. Thus, there is less mechanical pressure in the gasification zone, so the material here will not be compacted as much as in the system described in Figure 1 where the whole bed is on top of the gasification zone.

Figure 3 shows a completely different process system for a completely different fuel. All fuels occurring in the nature represent stored solar energy, from anthracite to living plant material. Younger fuels are more reactive than older fuels in pyrolysis and gasification reactions. So-called biomass, i.e. wood from energy plantations, plant material from algae plantations etc. as well as peat, which is also a young material, are therefore quite suitable raw materials for gasification and other processes for chemical conversion. These fuels may also be easily ground to fine particles and contain low contents of ashforming materials and sulphur compounds. The pyrolysis is carried out very fast and at a lower temperature than with e.g. coal. Large quantities of methane gas may be produced during the pyrolysis under suitable conditions. The amount of remaining char is considerably smaller than for a corresponding coal process subjected to a straight pyrolysis reaction, i.e. with no external supply of either steam or oxygen. These circumstances make these raw materials suitable for the production of a gas with a high amount of methane alternatively with a high amount of hydrogen in the procedure according to the invention. The higher activity also permits much shorter residence times, which in turn also requires the use of finely divided iron containing material, especially concentrates of various iron ores. Finely divided siderite which has been stabilized by air oxidation around 1000°C is a very suitable material. It is quite natural to operate with fluidized beds in these cases or even to use so-called entrained flow with the reactants carried through the system together with the gas flue.

The oxidation zone (3) is a fluidized bed, where the char resides a few minutes together with the iron containing particles, which are preferably particles derived from the mineral siderite. The product gas leaves through outlet pipe (16), whereas the iron containing material leaves through downcomer (18) to combustion zone (1), where the material is heated to about 1000°C in suspension flow. The combustion air is fed to the burner part of the combustion zone by pipe (9) and reacts with residual gas leaving the pyrolysis zone (2) by riser (7). The flue gases leave the combustion zone through pipe (5) which leads to a stack, whereas the hot iron containing particles are transferred to the pyrolysis zone (2) by conduit (12). Here the hot iron containing particles are contacted with the particles of the fuel added by means (28). The residence time is a few seconds or somewhat less and this stage of the reaction may be characterized as a flash pyrolysis stage. Char and reduced iron containing material are carried to the gasification zone at approximately 800°C by lift pipe (29) by means of steam added by pipe (15), which steam is also used for reaction with iron containing material and the char in the gasification bed. Some oxidation takes place also in the lift pipe. The reactor scheme according to Figure 3 makes use of the higher reactivity of the biofuels in an optimal manner.

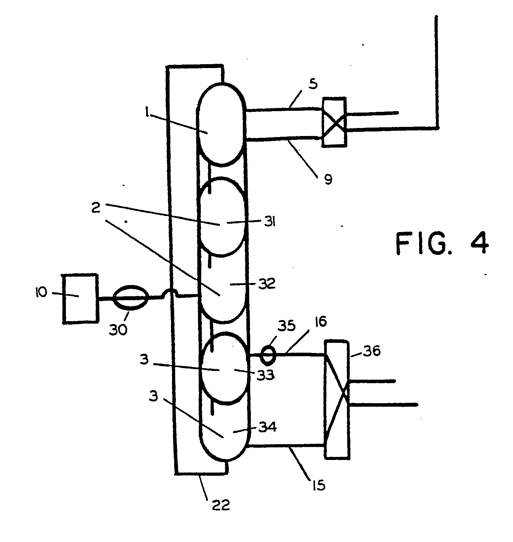

Figure 4 shows how a known process and plant, the so-called steam iron pilot plant, may be modified for the procedure according to the invention. This plant was built by the Institute of Gas Technology in Chicago and was intended for hydrogen production for the so-called Hygas plant for production of synthetic natural gas from lignite, peat etc. The plant is built up in a conventional manner from a process point of view. Thus the iron particles are reduced in the reduction step by means of a reducing gas produced in a special reactor, wheres the oxidation is taking place with steam in a second step. The process is described in the brochures and articles as Tarman and Punwani: "The steam iron program" IGT, October 1976, Chicago. The technology that has been developed for the handling and transport of the iron particles as well as the reactor design in general can be directly utilized for process systems for the procedure according to the invention. It has been found that such modification is of particular advantage for the production of a hydrogen rich product gas from biomass and peat. The embodiment according to Figure 4 is thus a direct modification of the system at the Institute of Gas Technology to be used for the process according to the invention for the production of a product gas with a very high hydrogen content for fuel cell power plants etc. After final purification with respect to carbon dioxide and carbon monoxide. The principal changes are the additions of a bed for the preheat step (1) and the feeding means (30) for the biofuel. The reduction step and the oxidation step are divided into two beds joined in series (31) and (32), respectively (33) and (34). Outgoing product gas is pressurized further by means of the compressor (35) prior to heat exchange with feed water in the heat exchanger (36). The thermal efficiency for this process is about 70% which is almost double as high as for the IGT process (not counting the utilization of the energy content of the spent producer gas from the steam iron pilot plant).

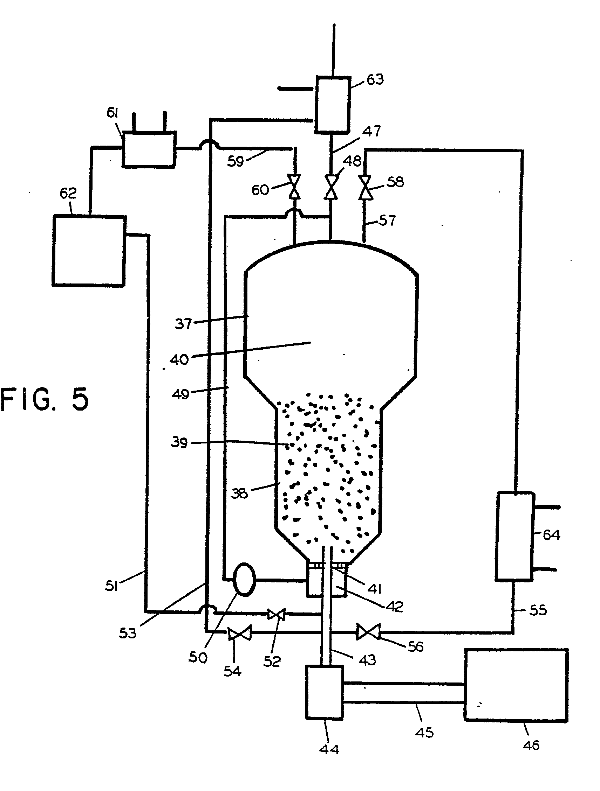

The preceding embodiments have in common that the iron containing material is brought to circulate between different reactors or reactor parts according to the principles for the ideal so-called tubular and tank reactor. The gravitating bed of the blast furnace reactor is an example of the reaction pattern of the tubular reactor, whereas fluidized beds with continuous charge and discharge of reactants follow the reaction pattern of the tank reactor. There is obviously also a possibility to carry out the reactions batchwise, i.e. according to the reaction pattern of the batch reactor. The reaction pattern of the batch reactor is particularly suitable for gasification of fuel with a small char residue for the production of a product gas with a high content of hydrogen. In this embodiment the iron containing material, contained in a batch reactor preferably in a fluidized condition, is so to say brought to circulate through the three reaction steps without being physically brought from one vessel to another. Instead the different reactants are brought into a successive contact with the iron containing material so as to produce the process scheme which is characteristic for the invention. Figure 5 shows an example of this embodiment.

Figure 5 shows an embodiment with only one batch reactor with means for accumulation of reaction products for the subsequent steps. The batch reactor (37) contains in principle two spaces with differing sections. The lower space (38) contains the fluidized material (39) which is separated from the gas stream in the upper space (40). The fluidizing gas is supplied in the known manner by means of a distributor, e.g. a sieve plate (41) with holes. There is a distribution chamber (42) disposed below this sieve plate with a feeding pipe (43) for the solid fuel in the form of powder or chips which is fed by means of the feeding means (44), e.g. a screw feeder.

The fuel is supplied by means of transport means (45) from the fuel storage (46).

Gas is leaving from the reactor via the conduit (47) containing a control valve (48). The gas is piped to different means depending on the particular reaction step, which is taking place in the reactor.

Gas may also be recirculated through the recirculation conduit (49) containing the recirculation fan (50) to the distribution chamber (42) so as to maintain suitable fluidizing conditions and permit a complete reaction between gas and the bed material.

When the reactor is in the preheat stage fuel gas is supplied, preferably accumulated remaining pyrolysis gas from the reduction step, via the conduit (51) containing the valve (52). The required amount of preferably preheated combustion air is simultaneously supplied via the conduit (53) containing the valve (54). In this case it is shown how the combustion gas, and the combustion air are fed to the feeder conduit (43) in order to eliminate eventual carbonized material which otherwise would accumulate in this conduit.

When the reactor is in the oxidation step steam is supplied in a analogous manner via the conduit (55) containing the valve (56). Leaving product gas is sent via the special conduit (57) containing the valve (58) for further treatment and utilization.

The procedure according to the invention may thus be carried out in this simple batch reactor which is running through the preheat step, the reduction step and the oxidation step where the iron containing material in the batch reactor is brought to circulate through the three reaction steps in the required manner by control of the flows of reactants and products to and from the reactor. When this is carried out in the one single batch reactor according to Figure 5 it is of advantage to improve the efficiency by heat recovery from the product gas and the flue gas. It is of course also highly desired to accumulate remaining pyrolysis gas from the reduction step for utilization in the preheat step which follows after the oxidation step. Figure 5 shows schematically how this may take place.

When the reactor is working in the reduction step, fuel is supplied to the fluidized bed by the feeder pipe (43). The valve (58) on the product gas conduit (57) is closed, the valve (48) of the flue gas conduit (47) is also closed. The pyrolysis gas is thus leaving through the pyrolysis gas conduit (59) through the valve (60), which is open in this process step, to the cooler (61). The cooler is delivering hot water to the steam system. The cooled pyrolysis gas is stored in the gas tank (62) for subsequent utilization in the preheat step. The system for pyrolysis gas also contains means for separation of tar which may be recirculated to the reactor by a pipe not shown in the figure. Gas fuel is taken from the gas tank is preferably used as fuel for the preheat step. If necessary auxiliary fuel may be also used. An obvious possibility is of course to use the primary fuel, e.g. wood chips, as auxiliary fuel in this case by means of the feeder pipe (43) also during the preheat step. Gas from the gas tank is supplied via the conduit (51) containing the valve (52). The gas supply must of course be controlled by means of flue gas analysis, thermometers etc. A special fan may also be required for the gas supply. The combustion air is preheated in the heat exchanger (63) in heat exchange with outgoing flue gas.

During the reduction step the flue gas system as well as the pyrolysis gas system are of course not connected to the reactor. Steam is now supplied to the reactor from the steam system (64) which contains heat exchangers for heat recovery of outgoing product gas.

The process scheme according to Figure 5 evidently contains a complication because of the desirability to accumulate and possibly also purify remaining pyrolysis gas for subsequent use in later reaction steps. An advantage is however that the reaction time in each one of the reaction steps can be optimized for each step.

The need for storage can be avoided by having several, e.g. three batch reactors according to Figure 5 in operation simultaneously with a suitable phase separation so that e.g. remaining pyrolysis gas from one reactor which is in the reduction step is carried over directly for combustion in the reactor which is in the preheat step.

The figures show only in principle the means which are required for the procedure according to the invention. The functioning process system also requires other components like cyclones for a complete separation of dust from the gases, means for recirculation of the excess of water vapor in the product gas, means for ash discharge, which may take place discontinually or at the end of the preheat step, means for pressurization and pressure control of the system, etc. The man skilled in the art of pyrolysis and gasification will experience no difficulty making use of such common means in these process systems.

The preceding description has been mainly concerned with the task to illustrate the spirit of the invention which is concerned with a completely new procedure for gasification of different kinds of solid fuels to fuel gas of high quality with a low content of carbon dioxide and nitrogen without the use of oxygen. The description has been exemplified in particular for the use of wood chip which is a solid fuel in a middle class between coal and household waste. I have also disclosed how the man skilled in the art may design means for carrying through the procedure according to the invention. This description is used only for the purpose of illustration and does not limit the scope of the invention.

The invention may be utilized in many different ways. The gasification reactors useful in the present invention may constitute important components in larger or smaller systems. The high reliability and the high production capacity make these systems particularly useful as components in large systems for the production of electrical energy, liquid and gaseous fuels and chemicals. However, gasification reactors useful in the present invention are also competitive when used in comparatively simple applications and on a small scale. Such applications include, for example, gasification of bark for the production of fuel gas for the power plant of a pulp plant, or gasification of household waste for the production of fuel gas for hot water production. Another use of these gasification reactors is as components in national systems for energy production based on domestic fuels like wood waste, industrial waste, agricultural waste and household waste. Large reactors may thus be strategically located in areas where the production of waste takes place and the output fuel gas may be distributed in pipelines to power plants, process industries and other consumers.

One may use the fuel gas in the form it is being generated but it may also be useful to convert the gas to hydrogen in reaction with water vapor with elimination of carbon dioxide or alternatively to convert the fuel gas to synthetic natural gas. In the former case, hydrogen may be used in fuel cell power plant in a so-called disperse power system. A preferred method is to adjust the fuel gas to make it suitable for the production of methanol or methyl fuel which may then be used as a fuel power plants and the transport system. In all these various applications, the processes and means for carrying out the processes of the present invention give greater advantages than the technology which is presently available.

Those skilled in this art may select the embodiment of this invention which is most suitable for a particular application, using well known hardware and operating principles. Of course, it is not practical to set out in this description every detail for each such application and embodiment. The state of this art is well described in, for example, Chemical Engineering Progress, Vol. 69, No. 12 (1973), pp. 50 to 61, and the whole of Vol. 69, No. 3 (1973) and also under various headings in Kirk Othmer, Encyclopedia of Chemical Technology, 2nd Edition.

## Claims

1. Procedure for gasification of solid fuels like oil shale, coal, lignite, wood, wood chips, green chips, peat, urban waste etc to a product gas with a high heating value and a low nitrogen content by means of an iron containing material in three stages whereby in the first stage, the preheat stage, the iron containing material is heated to a high temperature by means of hot combustion gases, whereafter in the second stage, the reduction stage, the iron containing material is brought into contact with the solid fuel which is thereby decomposed pyrolytically to a residue and a pyrolysis gas characterized in that the pyrolysis gas is brought to reduce the iron containing material partially in the reduction stage, whereafter remaining pyrolysis gas is burnt in the previous stage, that the residue together with the iron containing material, in a third stage, the oxidation stage, is reacted with water or water vapour in the formation of the product gas with simultaneous oxidation of the iron containing material.

2. Procedure according to Claim 1 characterized in that the iron containing material and the pyrolysis gas are passed through the preheat stage countercurrently and that the solid fuel and the pyrolysis gas are passed through the reduction stage cocurrently.

3. Procedure according to Claim 1 characterized in that sulphur compounds are eliminated from the pyrolysis gas prior to its entry to the preheat stage.

4. Procedure according to Claim 1 characterized in that hydrogen chloride is eliminated from the pyrolysis gas prior to its entry to the preheat stage.

5. Procedure according to Claim 1 characterized in that the iron containing material consists of pieces of iron ore with a particle size between 0.5—5.0 cm.

6. Procedure according to Claim 1 characterized in that the iron containing material consists of sintered pellets with a size between 0.5—5.0 cm.

7. Procedure according to Claim 1 characterized in that the iron containing material consists of an iron ore concentrate whereby the solid fuel is also introduced in finely divided form with the three stages being carried out in fluidized bed.

8. Procedure according to Claim 1 characterized in that the iron containing material consists of an iron ore concentrate whereby the solid fuel is also introduced in finely divided form whereby the three stages are carried out in flash reactors.

9. Procedure according to Claim 1 characterized in that the iron containing material consists of iron waste emanating from household waste.

10. Procedure according to Claim 1 characterized in that three stages are carried out in separate reactors or reactor parts with the iron containing material circulating between said parts.

11. Procedure according to Claim 1 characterized in that the three stages are carried out stepwise in reactors or reactor parts which contain the iron containing material.

12. Apparatus for carrying out the procedure according to claim 10, consisting of a plurality of reactor parts whereby the first reactor part (1) is furnished with means (4) for feeding an iron containing material, a conduit (5) for outgoing flue gas, inlets for pyrolysis gas (7) and combustion air (9) and means (12) for transfer of the iron containing material to a second reactor part (2), the transfer means (12) having an inlet for solid fuel for transfer with the iron containing material, characterised in that the second reactor part (2) has a pyrolysis gas outlet connected to the pyrolysis gas inlet of the first reactor part via a pyrolysis gas transfer conduit (7) and means (13) for transferring the iron containing material and the residue of the solid fuel to a third reactor part (3), which part has conduits (15, 16) for feeding water in liquid or vapor form and for discharging product gas, means (18) for discharge of the remaining solid material to means (19) for separating the solid material into iron containing material and ash, said means (19) having a discharge line (22) to return the iron containing material to the iron containing feed means (4) of first reactor part (1) and an ash outlet (21).

## Revendications

1. Procédé pour la gazéification de combustibles solides comme du schiste bitumeux, du charbon, de la lignite, du bois, des déchets de bois, des copeaux de bois fraîchement sciés, de la tourbe, des déchets· urbains, etc. . . , en un produit gazeux à pouvoir calorifique élevé et de faible teneur en azote au moyen d'une matière contenant du fer, en trois étapes selon lesquelles, dans la première étape ou étape de préchauffage, la matière contenant du fer est chauffée à une température élevé au moyen de gaz de combustion chauds, après quoi, dans la seconde étape, ou étape de réduction, la matière contenant le fer est amenée au contact du combustible solide qui est ainsi décomposé pyrolytiquement en un résidu et un gaz de pyrolyse, caractérisé en ce que la gaz de pyrolyse est amené à réduire la matière contenant le fer partiellement dans l'étape de réduction, après quoi le gaz de pyrolyse restant est brûlé dans l'étape précédente, et en ce que le résidu et la matière. contenant du fer, dans la troisième étape, ou étape d'oxydation, sont amenés à réagir avec de l'eau ou de la vapeur d'eau lors de la formation du produit gazeux, avec oxydation simultanée de la matière contenant du fer.

2. Procédé selon la revendication 1, caractérisé en ce que la matière contenant du fer et le gaz de pyrolyse circulent à contre-courant dans l'étape de préchauffage et en ce que le combustible solide et le gaz de pyrolyse circulent dans le même sens dans l'étape de réduction.

3. Procédé selon la revendication, caractérisé en ce que les composés du soufre sont éliminés du gaz de pyrolyse avant l'introduction de celui-ci dans l'étage de préchauffage.

4. Procédé selon la revendication 1, caractérisé en ce que le gaz chlorhydrique est éliminé du gaz de pyrolyse avant l'introduction de celui-ci dans l'étage de préchauffage.

5. Procédé selon la revendication 1, caractérisé en ce que la matière contenant du fer est constituée de morceaux de minerais de fer d'une granulométrie comprise entre 0,5 et 5 cm.

6. Procédé selon la revendication 1, caractérisé en ce que la matière contenant du fer est constituée de pellets frittés de dimensions comprises entre 0,5 et 5 cm.

7. Procédé selon la revendication 1, caractérisé en ce que la matière contenant du fer est un minerai de fer concentré, le combustible solide étant également introduit sous forme finement divisée, et les trois étapes étant effectuées sur des lits fluidisées.

8. Procédé selon la revendication 1, caractérisé en ce que la matière contenant du fer est un minerai de fer concentré, le combustible solide étant également introduit sous forme finement divisée et les trois étapes étant effectuées dans des réacteurs instantanés.

9. Procédé selon la revendication 1, caractérisé en ce que la matière contenant du fer est constituée de déchets de fer provenant de déchets domestiques.

10. Procédé selon la revendication 1, caractérisé en ce que les trois étapes sont effectuées dans des réacteurs ou parties de réacteur séparés, la matière contenant du fer circulant entre lesdites parties.

11. Procédé selon la revendication 1, caractérisé en ce que les trois étapes sont mises en oeuvre pas à pas dans des réacteurs ou des parties de réacteur qui contiennent la matière contenant du fer.

12. Appareil pour la mise en oeuvre du procédé spécifié sous la revendication 10, comportant une pluralité de parties de réacteur parmi lesquelles la première partie de réacteur (1) est pourvue de moyens (4) pour fournir une matière contenant du fer, une conduite (5) pour évacuer les gaz de sortie, des entrées pour le gaz de pyrolyse (7) et l'air de combustion (9) et des moyens (12) pour transférer la matière contenant du fer à une seconde partie de réacteur (2), les moyens de transfert (12) ayant une entrée pour le combustible solide pour le transfert avec la matière contenant du fer, caractérisé en ce que la seconde partie de réacteur (2) a une sortie de gaz de pyrolyse reliée à l'entrée de gaz de pyrolyse de la première partie du réacteur par l'intermédiaire d'une conduite de transfert de gaz de pyrolyse (7) et des moyens (13) pour transférer la matière contenant du fer et le résidu du combustible solide à une troisième partie de réacteur (3), qui a des conduites (15, 16) pour fournir de l'eau sous forme liquide ou vapeur et pour dégager le produit gazeux, des moyens (18) pour transmettre le reste de matière solide à des moyens (19) pour séparer la matière solide en matière contenant du fer et cendres, lesdits moyens (19) ayant une ligne de décharge (22) pour ramener la matière contenant du fer aux moyens (4) d'alimentation de matière contenant du fer de la première partie de réacteur (1) et une sortie de cendres (21).

## Patentansprüche

1. Verfahren zur Vergasung von festen Brennstoffen wie Ölschiefer, Kohle, Braunkohle, Holz, Holzspäne, "green chips", Torf, Stadtmüll usw., in ein Gas mit einem hohen Heizwert und einem niedrigen Stickstoffgehalt in drei Verfahrensschritten, mittels eines eisenhaltigen Materials, wobei das eisenhaltige Material im ersten Verfahrensschritt (Vorheizphase) mittels heißer Verbrennungsgase auf eine hohe Temperatur erhitzt wird, wonach im zweiten Verfahrensschritt (Reduktionsphase) das eisenhaltige Material in Kontakt gebracht wird mit dem festen Brennstoff, welcher sich hierdurch pyrolytisch zersetzt zu einem Rückstand und einem Pyrolysegas, dadurch gekennzeichnet, daß das Pyrolysegas während der Reduktionsphase das eisenhaltige Material teilweise reduziert, wonach das verbleibende Pyrolysegas im ersten (vorhergehenden) Verfahrensschritt verbrannt wird, und daß in einem dritten Verfahrensschritt (Oxydationsphase) der Rückstand zusammen mit dem eisenhaltigen Material mit Wasser oder Wasserdampf zur Reaktion gebracht wird, unter Bildung des Gases, bei gleichzeitiger Oxydation des eisenhaltigen Materials.

2. Verfahren nach Anspruch 1, dadurch gekennzeichnet, daß das eisenhaltige Material und das Pyrolysegas die Vorheizphase im Gegenstrom passieren und daß der Durchgang des festen Brennstoffes und des Pyrolysegases durch die Reduktionsphase im Parallelstrom erfolgt.

3. Verfahren nach Anspruch 1, dadurch gekennzeichnet, daß aus dem Pyrolysegas, vor dessen Eintritt in die Vorheizphase, Schwefelverbindungen ausgesondert werden.

4. Verfahren nach Anspruch 1, dadurch gekennzeichnet, daß aus dem Pyrolysegas, vor dessen Eintritt in die Vorheizphase, Chlorwasserstoff ausgesondert wird.

5. Verfahren nach Anspruch 1, dadurch gekennzeichnet, daß das eisenhaltige Material aus Eisenerzstücken mit einer Partikelgröße zwischen 0,5—5,0 cm besteht.

6. Verfahren nach Anspruch 1, dadurch gekennzeichnet, daß das eisenhaltige Material aus gesinerten Tabletten (Pellets) mit einer Größe zwischen 0,5—5,0 cm besteht.

7. Verfahren nach Anspruch 1, dadurch gekennzeichnet, daß das eisenhaltige Material aus einem Eisenerzkonzentrat besteht, wobei der feste Brennstoff ebenfalls in feinverteilter Form zugeführt und die drei Phasen im Fließbett durchgeführt werden.

8. Verfahren nach Anspruch 1, dadurch gekennzeichnet, daß das eisenhaltige Material aus einem Eisenerzkonzentrat besteht, wobei der feste Spaltstoff ebenfalls in feinverteilter Form zugeführt und die drei Phasen in "Flash-Reaktoren" durchgeführt werden.

9. Verfahren nach Anspruch 1, dadurch gekennzeichnet, daß das eisenhaltige Material aus Eisenabfällen von Haushaltsmüll besteht.

10. Verfahren nach Anspruch 1, dadurch gekennzeichnet, daß drei Phasen in getrennten Reaktoren oder Reaktorteilen ausgeführt werden, wobei das eisenhaltige Material zwischen den besagten Teilen zirkuliert.

11. Verfahren nach Anspruch 1, dadurch gekennzeichnet, daß die drei Phasen schrittweise in Reaktoren oder Reaktorteilen, die eisenhaltiges Material beinhalten, ausgeführt werden.

12. Vorrichtung zur Durchführung des Verfahrens nach Anspruch 10, bestehend aus einer Vielzahl von Reaktorteilen, wobei das erste Reaktorteil (1) mit Mitteln (4) zur Zuführung eines eisenhaltigen Materials, sowie mit einer Abgasleitung (5), Zuleitungen für das Pyrolysegas (7) und die Verbrennungsluft (9) und Mitteln zur Weiterleitung des eisenhaltigen Materials zu einem zweiten Reaktorteil (2) ausgerüstet ist und wobei die Übertragungsmittel (12) über eine Einlaßöffnung für den festen Brennstoff zur Weiterleitung mit dem eisenhaltigen Material verfügen, dadurch gekennzeichnet, daß für das zweite Reaktorteil (2) eine Auslaßöffnung für das Pyrolysegas vorgesehen ist, die über eine Pyrolysegas Übertragungsleitung (7) mit der Einlaßöffnung für das Pyrolysegas des ersten Reaktorteils verbunden ist, daß Mittel (13) vorgesehen sind, für die Weiterleitung des eisenhaltigen Materials und des festen Brennstoffrückstandes zu einem dritten Reaktorteil (3) wobei dieses dritte Reaktorteil über Leitungen (15, 16) für die Zuführung von Wasser in flüssiger oder Dampfform und die Ableitung des Gases verfügt, sowie über Mittel (18) zur Abführung des restlichen festen Materials zu Mitteln (19), welche für eine Trennung des festen Materials in eisenhaltiges Material und Asche sorgen, wobei die besagten Mittel (19) mit einer Leitung (22) ausgerüstet sind, zur Rückführung des eisenhaltigen Materials zu den für die Zufuhr des eisenhaltigen Materials vorgesehenen Mittel (4) des ersten Reaktorteils (1) und mit einer Austragöffnung (21) für die Asche.

0 0 15 261

FIG. 1

FIG. 2

FIG. 3

0 015 261

FIG. 4

4

FIG. 5